# EUROPEAN PATENT SPECIFICATION

(11) **EP 3 650 274 B1**
(45) Date of publication and mention of the grant of the patent: **23.12.2020**
(21) Application number: 19150405.9
(22) Date of filing: 04.01.2019
(51) Int. Cl.: B60R 9/06, B60D 1/06, B60R 9/10

(54) **REAR LOAD CARRIER**
HECKLASTTRÄGER
SUPPORT DE CHARGE ARRIÈRE

(30) Priority: 08.11.2018 CN 201811323670
(43) Date of publication of application: 13.05.2020
(73) Proprietor: Carman Enterprise Co., Ltd., Hangzhou 311121 (CN)
(72) Inventor: Li, Xianwei, Hangzhou, 311121 (CN)
(74) Representative: Paul & Albrecht Patentanwälte PartG mbB

(56) References cited:
- EP-A1- 3 085 581
- EP-A2- 0 665 135
- DE-U1-202006 012 073
- US-A- 2 874 976

## Description

The present invention relates to a rear load carrier for mounting on a motor vehicle with a supporting frame which has a connection device for fastening to a trailer hitch on the vehicle side, wherein the connection device comprises a housing body open towards an underside, two retaining elements which form a downwardly open receptacle between them for a connection head of the trailer hitch and are each mounted on the housing body so as to be pivotable about a swivel axis, and an operating device coupled to the retaining elements for pivoting them relative to one another between an insertion position in which the retaining elements are pivoted apart such that the connection device can be placed on or removed from the connection head and a holding position in which the retaining elements fixingly engage around a connection head located in the receptacle.

Load carriers for rear mounting on a motor vehicle such as an automobile are often used to transport bicycles. Typically, such a load carrier comprises a supporting frame to which, for example, profile rails for receiving the wheels of bicycles are fixed or attachable and, at its front end, a connection device by means of which the load carrier can be frictionally fixed to the connection head of a conventional trailer hitch.

A connection device for such a rear load carrier is disclosed in WO 2013/121271 A1. This includes a housing body, at which two opposite retaining elements are each mounted so that they can be pivoted about a swivel axis. The retaining elements have a contact surface intended for contact with the connection head of a trailer hitch and can be pivoted between an insertion position, in which the connection device can be placed on or removed from the connection head, and a holding position, in which the retaining elements engage around the connection head in a fixed manner. In the holding position, the swivel axis to the housing body is arranged approximately centrally to the connection head in the height direction.

One of the two retaining elements can not only be pivoted relative to the housing body, but also has a translational degree of freedom so that the distance between the two retaining elements can vary. In concrete terms, a swivel bolt defining the swivel axis of a retaining element is arranged in an oblong hole of the retaining element.

By means of an operating lever which has a support bolt bearing against the outer contour of the translatorically movable retaining element approximately at the height of the swivel axis in the holding position, a pressing force is applied to the latter in the direction of a connection head of a trailer hitch located in the receptacle. The translatory degree of freedom of one retaining element allows the connection device to be adapted to connection heads of different sizes.

An alternative connection device for such a rear load carrier is disclosed in EP 3 085 581 A1. The rear load carrier comprises a supporting frame having a connection device in its front end for fastening to a trailer hitch of a vehicle. The connection device furthermore comprises a housing body which is open towards its underside and two retaining elements which form a downwardly open receptable between them for a connection head of the trailer hitch. The retaining elements are pivotable relative to one another about a common swivel axis which is formed by a common swivel bold being guided vertically moveably by means of an oblong hole formed in the housing body. The rear load carrier further comprises an operating device having an operating lever which is pivotally moveable with regard to the supporting frame and in consequence to the housing body. The operating lever is connected to a pressure element which can come into engagement with a corresponding recess formed in at least one retaining element.

For mounting on a trailer hitch the retaining elements are pushed from their downward position upwards by the weight of rear load carrier into their holding position. Therefore they are guided by the housing body as they slide over the inner surface of the housing body. If the retaining elements have reached their holding position the pressure element can be brought into engagement into the recess by swiveling the operating lever.

An alternative connection device for a rear load carrier is disclosed in EP 0 665 135 A2. This connection device comprises two retaining elements which are pivotally connected about common swivel axis which is vertically moveable with respect to a housing body. When the connection device is positioned on a trailer hitch the retaining elements are moved upwards due to the weight of the load carrier. In their holding position a bold which is mounted on an operating device comes into engagement into a corresponding recess formed in the retaining element on the right side.

Even though such rear load carriers with such connection devices have proved itself in practice, it is still considered disadvantageous that the pressing force is applied in an undefined way due to the translatory movable bearing of one retaining element and the introduction of force at the height of the swivel axes.

The task of this invention is therefore to provide a rear load carrier with an alternative connection device which avoids the aforementioned disadvantages and enables a safe and quick attachment to a trailer hitch of a motor vehicle.

In a rear load carrier of the type mentioned above, this task is solved in that the operating device is pivotally connected to both retaining elements above the swivel axis in such a way that the free end sections of both retaining elements located below the swivel axes are pivoted towards one another in opposite directions by the operating device when the retaining elements are pivoted from their insertion position into their holding position.

The invention is based on the idea of articulating the two pivotable retaining elements above the swivel axes to an operating device so that the end sections located below the swivel axes are moved towards each other and pressed against the connection head of a trailer hitch when the retaining elements are pivoted from their insertion position into the holding position by exerting an outwardly acting opposite force on the upper ends of the retaining elements by means of the operating device. The targeted application of a pressing force in the lower end section of the retaining elements ensures that the retaining elements are in contact with the outer contour of the connection head in this area and that the rear load carrier is fixed in a defined manner by means of friction against unintentional twisting.

In a further configuration, the retaining elements each comprise a lay-on surface which is designed to abut a neck of the connection head which adjoins the spherical section at the bottom. Preferably, the lay-on surface has a contour corresponding to a portion of a cylinder shell. A connection head of a conventional trailer coupling comprises a spherical section and a substantially cylindrical neck connected underneath. By placing the retaining elements on the neck of the connection head, the rear load carrier is arranged at a defined position relative to it. At the same time, a supporting force can be applied to the rear load carrier via the neck of the connection head, which counteracts the weight forces occurring due to the loads attached to the rear load carrier.

Furthermore, the retaining elements may each comprise a contact surface which is designed to abut the spherical section of the connection head, the contact surface in particular having a contour corresponding to a partial section of a sphere. By placing the retaining elements on the spherical section of a connection head, the rear load carrier is uniquely positioned relative to the connection head in all directions. In addition, a pressing force can be exerted via the contact surface, which counteracts unintentional rotation of the rear load carrier about the vertical axis.

Preferably, the contact surfaces of the retaining elements in the holding position are each formed annularly about a horizontally extending axis. This design is based on the consideration of being able to apply a locally high pressing force to the spherical section of a connection head only in a ring-shaped partial area and at the same time to carry out a defined positioning of the rear load carrier on the connection head.

In a preferred embodiment, the swivel axes of the retaining elements extend parallel to each other. Such an alignment of the swivel axes enables simple production of the individual components and leads to a defined application of force.

At least one retaining element can be mounted pivotally about a swivel bolt defining the swivel axis of the retaining element and is held on the housing body. This can be a swivel bolt that passes between the two sides of the housing body and is arranged in a corresponding bore of the retaining element. Alternatively, it would also be conceivable that at least one retaining element would have a laterally projecting bolt-like projection on its two side faces, which are arranged in corresponding holes in the housing body.

Preferably, one of the swivel bolts is adjustably disposed on the housing body so that the distance between the swivel axes from each other is adjustable to enable the connection device to be adapted to connection heads of different sizes. This design is based on the consideration that the connection heads of trailer hitches are subject to wear and thus the diameter of the spherical section can vary. This requires a possibility for adaptation to connection heads of different sizes.

In concrete terms, the adjustable swivel bolt can be guided so as to be linearly moveable, in particular horizontally movable. The adjustable swivel bolt is preferably guided in oblong holes formed in the housing body. Such a guidance enables direct adaptation to connection heads of different sizes, as the swivel axes of the two retaining elements are moved towards each other in the case of a smaller connection head and the swivel axes of the two retaining elements can be moved away from each other in the case of a larger connection head.

For adjustment, the adjustable swivel bolt can be moved by means of an adjusting screw arranged on the housing body. The adjusting screw is preferably screwed into a corresponding threaded hole of the housing body and bears with its free face side facing inwards against the adjustable swivel bolt so that the adjustable swivel bolt can be moved relative to the housing body by turning the screw. Such a mechanism allows the adjustable swivel bolt to be positioned relative to the housing body and thus relative to the other retaining element. The adjusting screw can have an intrusion contour, e.g. an internal hexagonal profile, for the insertion of a corresponding intrusion medium, e.g. an internal hexagon wrench. This prevents accidental movement of the adjusting screw and thus the position of the adjustable swivel bolt due to unintentional contact with the adjusting screw.

In a further embodiment of this invention, one swivel bolt is fixedly arranged to the housing body as a fixed swivel bolt.

Furthermore, the operating device can comprise an operating lever which is pivotally mounted on the housing body and is connected to the retaining elements via an intermediate lever mechanism in such a way that a pivoting movement of the operating lever is converted into counter-rotating pivoting movements of the two retaining elements about their swivel axes. A movement of the operating lever thus leads to the simultaneous pivoting movement of the two retaining elements in opposite directions. As consequence, when the connection device is placed on the connection head of a trailer hitch, the free lower end sections of both retaining elements located below the swivel axis are moved towards each other simultaneously. This kinematics means that to connect the rear load carrier to a motor vehicle, the connection device only has to be placed on the connection head of the trailer coupling from above and no horizontal movement is required, since the contour of the contact surface and the movement of both retaining elements automatically center the connection device on the connection head.

The intermediate lever mechanism is preferably designed as a toggle lever mechanism. Such a toggle lever mechanism has the advantage that a high pressing force can be applied to the retaining elements due to the kinematic arrangement.

In a preferred design of this embodiment, the operating lever is mounted on a projection projecting upwards from the housing body. The operating lever, starting from its swivel axis extending in particular parallel to the swivel axis of the retaining elements, comprises a long lever arm for manual actuation and a short lever arm for articulated connection to the intermediate lever mechanism. The long lever arm and the short lever arm of the operating lever may include an angle of at least 70°, in particular of at least 80°, and of at most 110°, in particular of at most 100°, preferably an angle of 90°. This design of the operating lever allows the pressing force required to hold the rear load carrier to a trailer coupling on the vehicle side to be applied manually.

The intermediate lever mechanism may comprise at least one linking element which is pivotally arranged in its one end region on the short lever arm of the operating lever, and two intermediate elements which at one end are connected in an articulated manner to in each case one retaining element and at its other end to the linking element in an articulated manner about a common central rotary axis in particular extending parallel to the swivel axis of the retaining elements. A linking element is thus connected to the short lever arm of the operating lever, which in turn is connected at its other end to two intermediate elements, each of which articulates one holding element above the respective swivel axis.

The intermediate lever mechanism is preferably designed in such a way that the central rotary axis has exactly one translational degree of freedom relative to the housing body. Specifically, the intermediate lever mechanism comprises at least one pintle defining the central rotary axis, about which the at least one linking element and/or the intermediate elements are pivotally mounted. The pintle is preferably guided in vertically extending elongated holes of the housing body.

This design is based on the idea of achieving a largely symmetrical arrangement of the intermediate lever mechanism so that the two retaining elements in their holding position are subjected to approximately the same forces. The vertically extending elongated holes for guiding the pintle represent a simple way of achieving this symmetrical basic arrangement, as the intermediate elements extend essentially symmetrically from the pintle to the retaining elements.

The intermediate elements preferably have the same effective length, whereby the effective length of the intermediate elements can be within a ratio of between 1.2 and 0.5 to the effective length of the linking element. The effective length is understood to be the distance between the two swivel axes acting on the respective element, i.e. for the linking element the distance between the swivel axis with the short lever arm of the operating lever and the central rotary axis, for the intermediate elements the distance between the central rotary axis and the respective articulated connection with the retaining elements. Such a ratio of effective lengths has proven to be advantageous for the favourable application of forces.

The intermediate lever mechanism may be such that when moving from the insertion position to the holding position a dead centre of the coupling element and the intermediate elements is exceeded, so that the intermediate lever mechanism is automatically secured against unintentional movement to the insertion position in the holding position of the retaining elements. Alternatively, it is also conceivable that the actuating device is provided with a locking device in which, for example, a locking bolt fastened to the housing body engages in a corresponding hole formed on the operating lever when the retaining elements are in their holding position.

In a further development of the invention, an elastic tensioning mean is associated to each retaining element which presses the retaining elements into their insertion position. The tensioning means can be designed in the form of leg springs which lie around the respective swivel axis, whereby in particular one leg of the leg spring is supported against the housing body and the other leg against the respective retaining element. The arrangement of the leg springs applies a torque to the retaining elements so that they remain in their insertion position as long as the operating lever is not pivoted from its vertical orientation corresponding to the insertion position to its horizontal orientation corresponding to the holding position. In addition, the adjustable swivel bolt is pressed by the leg springs against the free front side of the adjusting screw so that it is adjustable, but clearly positioned in every position of the operating device by the contact with the front side of the adjusting screw and thus does not have a translatory degree of freedom of movement.

For further details of the invention, it is referred to the subclaims as well as to the following description of an embodiment of the invention with reference to the drawing.

In the drawing shows:
- Figure 1: a rear load carrier according to the present invention in a perspective view;
- Figure 2: the rear load carrier of Figure 1 without a trailer hitch in a front view;
- Figure 3: the rear load carrier from Figure 1 without a trailer hitch in insertion position in a sectional view;
- Figure 4: the rear load carrier in Figure 1 in insertion position in a sectional view;
- Figure 5: the rear load carrier from Figure 1 between the insertion position and the holding positions in a sectional view; and
- Figure 6: the rear load carrier from Figure 1 in holding position in a sectional view.

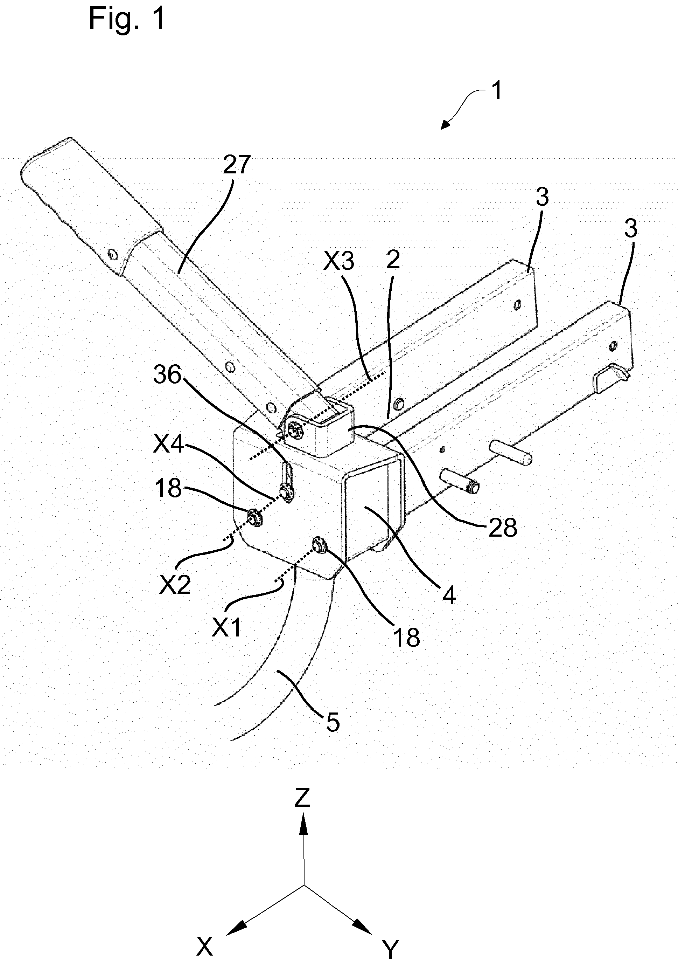

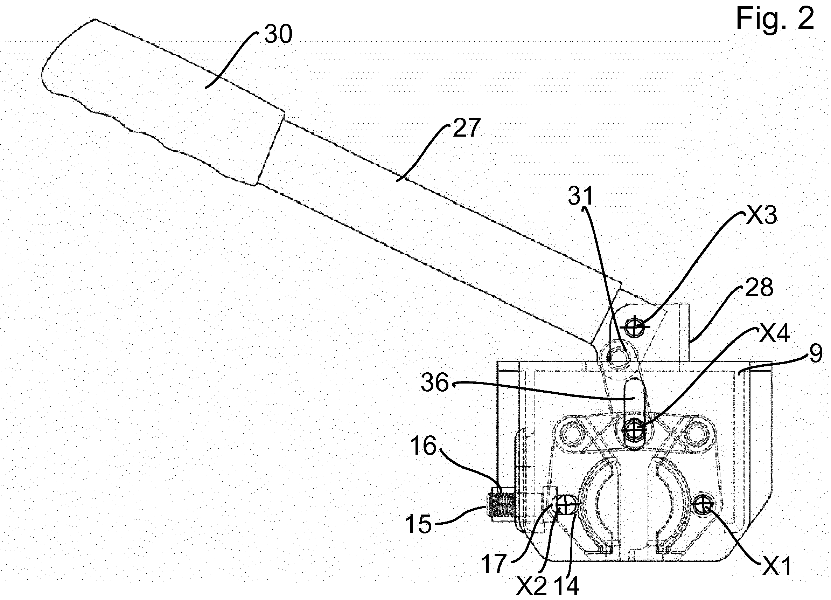

Figures 1 to 6 show a rear load carrier 1 according to the present invention for mounting on a motor vehicle. This comprises a supporting frame 2 with two parallel extending profiles 3 for the support of loads or fasteners for loads. Specifically, rails can be attached to the profiles 3 to accommodate wheels of bicycles.

The support frame 2 also comprises a connection device 4 for attachment to a trailer hitch 5 on the vehicle side. The trailer hitch 5, as shown in Figures 1, 4, 5 and 6, has a connection head 6 with an upper spherical section 7 and a neck 8, which is substantially cylindrical and adjoins the upper spherical section 7 at the bottom.

The connection device 4 comprises a housing body 9 which is open towards the underside, as well as two retaining elements 10, 11 which form a receptacle for the connection head 6 of the trailer hitch 5 which is open towards the bottom between them. The retaining elements 10, 11 are mounted on the housing body 9 so that they can swivel about by swivel bolts 12, 13 defining the swivel axes X1, X2 which extend parallel to each other in the x-direction.

One swivel bolt 13 is arranged translatorically adjustable on the housing body 9, so that the distance between the swivel axes X1, X2 can be adjusted to enable the connection device 4 to be adapted to connection heads 6 of different sizes. In concrete terms, the adjustable swivel bolt 13 is linearly movable in the horizontal direction and guided by oblong holes 14 formed in the housing body 9. By means of an adjusting screw 15, which is screwed into a corresponding threaded hole 16 of the housing body 9 and abuts the adjustable swivel bolt 13 with its free face side 17 pointing inwards, the latter can be adjusted relative to the housing body 9.

The other swivel bolt 12 is fixed to the housing body 9. Both the adjustable swivel bolt 13 and the fixed swivel bolt 12 protrude laterally from the housing body 9 and, as shown in Figure 1, are secured against lateral movement out of the housing body 9 by nuts 18.

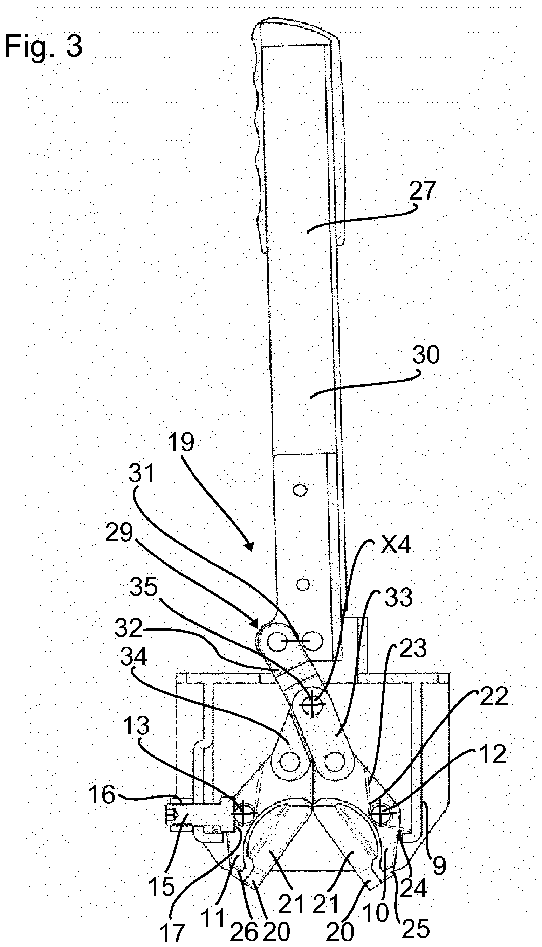

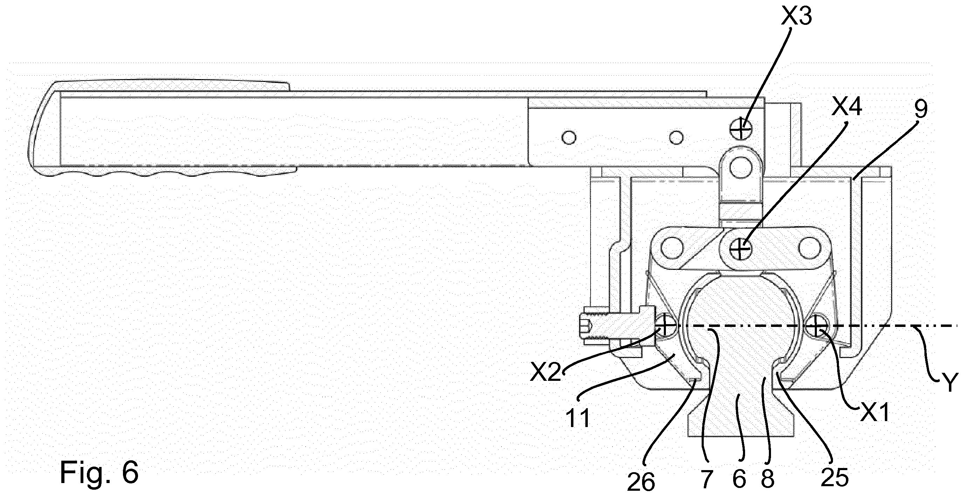

An operating device 19 is coupled to the retaining elements 10, 11 by means of which they can be pivoted between an insertion position as shown in Figure 3 and a holding position as shown in Figure 6. In the insertion position, the retaining elements 10, 11 are pivoted apart in such a way that the connection device 4 can be placed on or removed from the connection head 6, whereas in the holding position, the retaining elements 10, 11 fixingly engage around a connection head 6 located in the receptacle.

The retaining elements 10, 11 each have a lay-on surface 20 which is designed to abut the neck 8 of the connection head 6. For this purpose, the lay-on surface 20 has a contour corresponding to a portion of a cylinder shell.

In addition, the retaining elements 10, 11 each have a contact surface 21 adapted to abut the spherical portion 7, the contact surface 21 having a contour corresponding to a partial section of a sphere. In the holding position, the contact surfaces 21 of the retaining elements 10, 11 are each formed annually around a horizontally extending axis Y.

An elastic tensioning means is associated to each retaining element 10, 11 in the form of a leg spring 22 which presses the respective holding element 10, 11 in its insertion position. The leg springs 22 lie around the swivel bolts 12, 13, one leg 23 supported against the housing body 9 and the other leg 24 against the respective retaining element 10, 11. The torque applied by the leg springs 22 further ensures that the adjustable swivel bolt 13 is pressed against the free face side 17 of the adjusting screw 15, so that in each position of the retaining elements 10, 11 it is ensured that the adjustable swivel bolt 13 bears against the face side 17 of the adjusting screw 15.

Above the respective pivot axes X1, X2, the two retaining elements 10, 11 are pivotally connected to the operating device 19 in such a way that the free end sections 25, 26 of the two retaining elements 10, 11 lying below the swivel axes X1, X2 are pivoted towards one another in opposite directions by the operating device 19 when the retaining elements 10, 11 are pivoted from their insertion position into their holding position. The operating device 19 comprises an operating lever 27 which is pivoted on a projection 28 projecting upwards from the housing body 9. The operating lever 27 is connected to the retaining elements 10, 11 via an intermediate lever mechanism 29 designed as a toggle lever mechanism in such a way that a pivoting movement of the operating lever 27 is converted into counter-rotating pivoting movements of the two retaining elements 10, 11 about their swivel axes X1, X2.

The operating lever 27 comprises a long lever arm 30 for manual actuation and a short lever arm 31 for articulated connection to the intermediate lever mechanism 29 starting from its x-directional swivel axis X3 on the projection 27. The long lever arm 30 and the short lever arm 31 of the operating lever 27 include an angle of 90°.

The intermediate lever mechanism 29 includes a linking element 32, one end of which is held pivotably on the short lever arm 31 of the operating lever 27. Furthermore, the intermediate lever mechanism 29 comprises two intermediate elements 33, 34, which have the same effective length. The effective length of the intermediate elements 33, 34 has a ratio of about 0.85 to the effective length of the coupling element 32.

The intermediate elements 33, 34 are connected in an articulated manner at one end to a retaining element 10, 11 and at their other end to the linking element 32 around a common central rotary axis X4, which extends in the x-direction. The central rotary axis X4 is defined by a pintle 35, around which the linking element 32 and the intermediate elements 33, 34 are fixed pivotally. The pintle 35 is guided in vertically extending elongated holes 36 of the housing body 9, so that the central rotary axis X4 relative to the housing body 9 has exactly one translational degree of freedom in the vertical direction.

If a rear load carrier 1 is to be attached to the trailer hitch 5 of a vehicle, it is first in its insertion position shown in Figure 3. The long lever arm 30 of the operating lever 27, which is used for manual operation, points in a vertical direction, so that the short lever arm 31 points in a horizontal direction. Via the linking element 32 and the intermediate elements 33, 34 the retaining elements 10, 11 are arranged in their insertion position. Furthermore, torques act on the retaining elements 10, 11 through the two leg springs 22, which also ensure that the retaining elements 10, 11 remain in their insertion position.

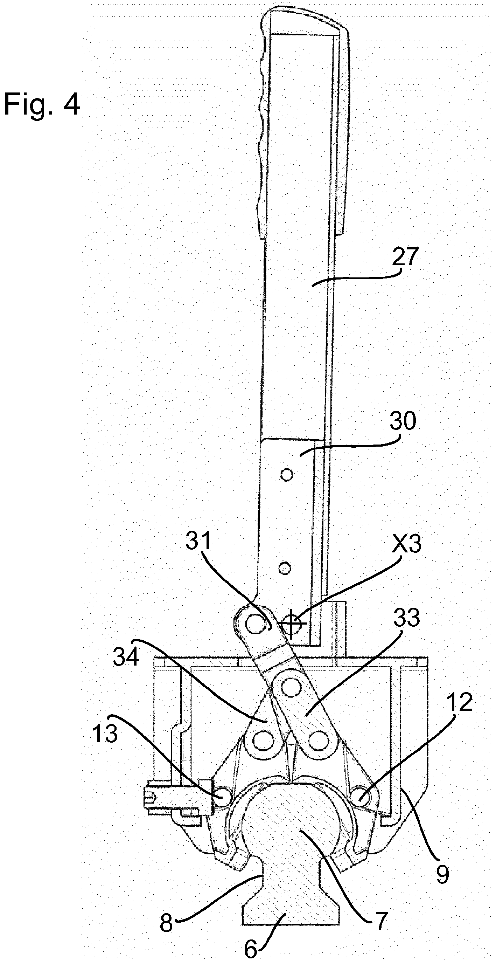

If now, as shown in Figure 4, the connection device 4 is placed on the connection head 6 of the trailer hitch 5, the annular contact surface 21 of the retaining elements 10, 11 with the spherical section 7 of the connection head 6 comes into contact first. By this the connection device 4 is automatically centered on the connection head 6, so that a horizontal displacement of the rear load carrier 1 relative to the connection head 6, as is necessary for conventional connection devices having one fixed and one movable retaining element, is not necessary when the connection device 4 is placed on the connection head 6.

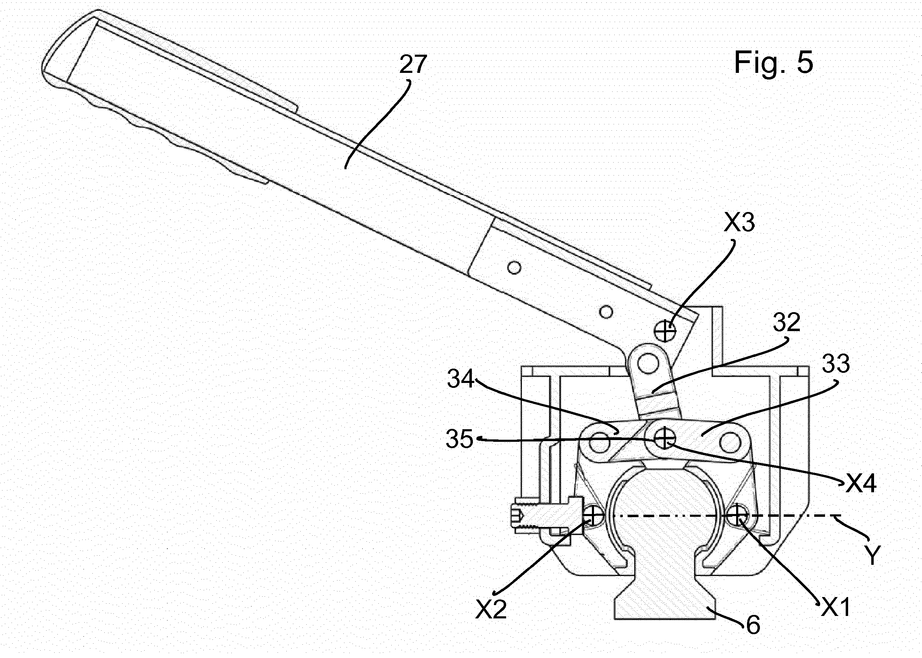

The operating lever 27 is then moved to a horizontal position by manually actuating the long lever arm 30, as shown in Figure 5 in an intermediate position and Figure 6 in the holding position. Via the linking element 32, the pintle 35 is moved downwards in the vertical direction so that the intermediate elements 33, 34 move into an essentially horizontal position. This is accompanied by a pivoting movement of the retaining elements 10, 11 in such a way that they are moved outwards in their end sections above the pivoting axis X1, X2 and inwards against the connection head 6 in their lower end sections 25, 26 below the pivoting axis X1, X2. In their holding position, the intermediate elements 33, 34 are arranged essentially horizontally and thus cause a pressing force to be applied over the lower end sections 25, 26 of the retaining elements 10, 11 to the neck 8 of the connection head 6.

The intermediate lever mechanism 29 is in a state which extends beyond a dead centre, which means that unintentional release from the holding position is prevented without a locking device being necessary.

### reference character list

- 1: rear load carrier
- 2: supporting frame
- 3: profile
- 4: connection device
- 5: trailer hitch
- 6: connection head
- 7: spherical section
- 8: neck
- 9: housing body
- 10: retaining element
- 11: retaining element
- 12: fixed swivel bolts
- 13: adjustable swivel bolt
- 14: oblong holes
- 15: adjusting screw
- 16: threaded hole
- 17: face side
- 18: nut
- 19: operating device
- 20: lay-on surface
- 21: contact surface
- 22: leg spring
- 23, 24: legs
- 25: lower end section
- 26: lower end section
- 27: operating lever
- 28: projection
- 29: intermediate lever mechanism
- 30: long lever arm
- 31: short lever arm
- 32: linking element
- 33, 34: intermediate element
- 35: pintle
- 36: elongated holes
- X1, X2: swivel axes
- X3: swivel axis
- X4: central rotary axis
- Y: horizontal axis

## Claims

1. Rear load carrier (1) for mounting on a motor vehicle
with a supporting frame (2) which has a connection device (4) for fastening to a trailer hitch on the vehicle side, the connection device (4) comprising
a housing body (9) open towards the underside,
two retaining elements (10, 11) which form a downwardly open receptacle between them for a connection head (6) of the trailer hitch and are each mounted on the housing body (9) so as to be pivotable about a swivel axis (X1, X2), and
an operating device (18) coupled to the retaining elements (10, 11) for pivoting them relative to one another between an insertion position in which the retaining elements (10, 11) are pivoted apart such that the connection device (4) can be placed on or removed from the connection head (6) and a holding position in which the retaining elements (10, 11) fixingly engage around a connection head (6) located in the receptacle,
**characterized in that** the operating device (18) is pivotally connected to both retaining elements (10, 11) above the swivel axis (X1, X2) in such a way that the free end sections (25, 26) of both retaining elements (10, 11) located below the swivel axis (X1, X2) are pivoted towards one another in opposite directions by the operating device (19) when the retaining elements (10, 11) are pivoted from their insertion position into their holding position.

2. Rear load carrier (1) according to claim 1, **characterized in that** the retaining elements (10, 11) each comprise a lay-on surface (20) which is designed to abut a neck (8) of the connection head which adjoins the spherical section (7) on the bottom side, the lay-on surface (20) in particular having a contour corresponding to a portion of a cylinder shell.

3. Rear load carrier (1) according to claim 2, **characterized in that** the retaining elements (10, 11) each comprise a contact surface (21) which is designed to abut the spherical section (7) of the connection head (6), the contact surface (21) in particular having a contour corresponding to a partial section of a sphere, the contact surfaces (21) of the retaining elements in the holding position preferably being each formed annularly about a horizontally extending axis (Y).

4. Rear load carriers (1) according to one of the preceding claims, **characterized in that** the swivel axes (X1, X2) of the retaining elements (10, 11) extend parallel to each other.

5. Rear load carrier (1) according to one of the preceding claims, **characterized in that** at least one retaining element (10, 11) is mounted pivotally about a swivel bolt (12, 13) defining the swivel axis (X1, X2) of the retaining element (10, 11) and is held on the housing body (9).

6. Rear load carrier (1) according to claim 5, **characterized in that** one of the swivel bolts (13) is adjustably disposed on the housing body (9) so that the distance of the swivel axes (X1, X2) from each other is adjustable to enable the connection device (4) to be adapted to connection heads (6) of different sizes, adjustable swivel bolt (13) in particular being guided so as to be linearly movable, preferably horizontally movable, the adjustable swivel bolt (13) preferably being guided in oblong holes (14) formed in the housing body (9).

7. Rear load carrier (1) according to claim 6, **characterized in that** the adjustable swivel bolt (13) is movable by an adjusting screw (15) arranged on the housing body (9), the adjusting screw (15) in particular being screwed into a corresponding threaded hole (16) of the housing body (9) and bearing with its free face side (17) facing inwards against the adjustable swivel bolt (13), so that by turning the screw (15) the adjustable swivel bolt (13) can be moved relative to the housing body (9).

8. Rear load carrier (1) according to one of the claims 5 to 7, **characterized in that** one swivel bolt (12) is fixedly arranged on the housing body (9) as a fixed swivel bolt (12).

9. Rear load carrier (1) according to one of the preceding claims, **characterized in that** the operating device (19) comprises an operating lever (27) which is pivotally mounted on the housing body (9) and is connected to the retaining elements (10, 11) via an intermediate lever mechanism (29) in such a way that a pivoting movement of the operating lever (27) is converted into counter-rotating pivoting movements of the two retaining elements (10, 11) about their swivel axes (X1, X2), the intermediate lever mechanism (29) in particular being formed as a toggle lever mechanism, the operating lever (27) preferably being mounted on a projection (28) projecting upwards from the housing body (9).

10. Rear load carrier (1) according to claim 9, **characterized in that** the operating lever (27), starting from its swivel axis (X3) extending in particular parallel to the swivel axes (X1, X2) of the retaining elements (10, 11) comprises a long lever arm (30) for manual actuation and a short lever arm (31) for articulated connection to the intermediate lever mechanism (29), the long lever arm (30) and the short lever arm (31) of the operating lever (27) in particular including an angle of at least 70°, preferably of at least 80°, and of at most 110°, preferably of at most 100°, most preferably an angle of 90°.

11. Rear load carrier (1) according to claim 10, **characterized in that** the intermediate lever mechanism (29) comprises at least one linking element (32) which is pivotally arranged in its one end region on the short lever arm (31) of the operating lever (27), and two intermediate elements (33, 34) which at one end are connected in an articulated manner to in each case one retaining element (10, 11) and at its other end to the linking element (32) in an articulated manner about a common central rotary axis (X4) in particular extending parallel to the swivel axes (X1, X2) of the retaining elements (10, 11).

12. Rear load carrier (1) according to claim 11, **characterized in that** the intermediate lever mechanism (29) is designed such that the central rotary axis (X4) has exactly one translational degree of freedom relative to the housing body (9).

13. Rear load carrier (1) according to claim 12, **characterized in that** the intermediate lever mechanism (29) comprises at least one pintle (35) defining the central rotary axis (X4), about which the at least one linking element and/or the intermediate elements (33, 34) are pivotably mounted, the at least one pintle (35) in particular being guided in vertically extending elongated holes of the housing body (9).

14. Rear load carrier (1) according to one of the claims 11 to 13, **characterized in that** the intermediate elements (33, 34) have the same effective length, the effective length of the intermediate elements (33, 34) in particular being within a ratio between 1.2 and 0.5 to the effective length of the linking element (32).

15. Rear load carrier (1) according to one of the preceding claims, **characterized in that** an elastic tensioning mean (22) is associated to each retaining element (10, 11) which presses the retaining elements (10, 11) into their insertion position, the tensioning means in particular being in the form of leg springs (22) which lie around the swivel bolts (12, 13), one leg preferably being supported against the housing body (9) and the other leg against the respective retaining element (10, 11).

## Patentansprüche

1. Hecklastenträger (1) zur Montage an einem Kraftfahrzeug
mit einem Tragrahmen (2), der eine Anschlusseinrichtung (4) zur Befestigung an einer fahrzeugseitigen Anhängerkupplung aufweist, wobei die Anschlusseinrichtung (4)
einen zu einer Unterseite hin offener Gehäusekörper (9)
zwei Halteelemente (10, 11), die zwischen sich eine nach unten offene Aufnahme für einen Anschlusskopf (6) der Anhängerkupplung bilden und jeweils um eine Schwenkachse (X1, X2) am Gehäusekörper (9) schwenkbar gelagert sind, und
eine Betätigungseinrichtung (19), die mit den Halteelementen (10, 11) gekoppelt ist, um diese zwischen einer Einschubstellung, in der die Halteelemente (10, 11) derart auseinander geschwenkt sind, dass die Anschlusseinrichtung (4) auf den Anschlusskopf (6) aufgesetzt oder davon heruntergenommen werden kann, und einer Haltestellung, in der Halteelemente (10, 11) einen in der Aufnahme befindlichen Anschlusskopf (6) fixierend umgreifen, relativ zueinander zu verschwenken, aufweist,
**dadurch gekennzeichnet, dass** die Betätigungseinrichtung (19) mit beiden Halteelementen (10, 11) oberhalb der Schwenkachse (X2, X2) gelenkig derart verbunden ist, dass die unterhalb der Schwenkachse (X1, X2) liegenden freien Endabschnitte beider Halteelemente (10, 11) durch die Betätigungseinrichtung (19) gegenläufig aufeinander zu geschwenkt werden, wenn die Haltelemente (10, 11) aus ihrer Einschubstellung in ihre Haltestellung geschwenkt werden.

2. Hecklastenträger (1) nach Anspruch 1, **dadurch gekennzeichnet, dass** die Halteelemente (10, 11) jeweils eine Anlagefläche (20) aufweisen, welche ausgebildet ist, um an einem sich untenseitig an den kugelförmigen Abschnitt (7) anschließenden Hals (8) des Anschlusskopfes in Anlage zu kommen, wobei die Anlageflächen (20) insbesondere eine einem Abschnitt eines Zylindermantels entsprechende Kontur aufweisen.

3. Hecklastenträger (1) nach Anspruch 2, **dadurch gekennzeichnet, dass** die Halteelemente (10, 11) jeweils eine Kontaktfläche (21) aufweisen, die ausgebildet ist, um an dem kugelförmigen Abschnitt (7) des Anschlusskopfes (6) in Anlage zu kommen, wobei die Kontaktfläche (21) insbesondere eine einem Teilabschnitt einer Kugel entsprechende Kontur aufweist, wobei die Kontaktflächen (21) der Halteelemente bevorzugt in der Haltestellung jeweils ringförmig um eine sich horizontal erstreckende Achse (Y) ausgebildet sind.

4. Hecklastenträger nach einem der vorherigen Ansprüche, **dadurch gekennzeichnet, dass** sich die Schwenkachsen (X1, X2) der Halteelemente (10, 11) parallel zueinander erstrecken.

5. Hecklastenträger (1) nach einem der vorherigen Ansprüche, **dadurch gekennzeichnet, dass** zumindest ein Halteelement (10, 11) um einen die Schwenkachse (X1, X2) des Halteelements (10, 11) definierenden und am Gehäusekörper (9) gehaltenen Schwenkbolzen (12, 13) schwenkbar gelagert ist.

6. Hecklastenträger (1) nach Anspruch 5, **dadurch gekennzeichnet, dass** einer der beiden Schwenkbolzen (13) verstellbar an dem Gehäusekörper (9) angeordnet ist, so dass der Abstand der Schwenkachsen (X1, X2) voneinander einstellbar ist, um ein Anpassen der Anschlusseinrichtung (4) an Anschlussköpfe (6) unterschiedlicher Größe zu ermöglichen, wobei der verstellbare Schwenkbolzen (13) insbesondere linear bewegbar, bevorzugt horizontal bewegbar geführt ist, wobei der verstellbare Schwenkbolzen (13) bevorzugt in im Gehäusekörper (9) ausgebildeten Langlöchern (14) geführt ist.

7. Hecklastenträger (1) nach Anspruch 6, **dadurch gekennzeichnet, dass** der verstellbare Schwenkbolzen (13) durch eine am Gehäusekörper (9) angeordnete Einstellschraube (15) bewegbar ist, wobei die Einstellschraube (15) insbesondere in einer korrespondierenden Gewindebohrung (16) des Gehäusekörpers (9) eingeschraubt ist und mit ihrer nach innen weisenden freien Stirnseite (17) an dem verstellbaren Schwenkbolzen (13) anliegt, so dass durch Verdrehen der Schraube (15) der verstellbare Schwenkbolzen (13) relativ zum Gehäusekörper (9) bewegbar ist.

8. Hecklastenträger (1) nach einem der Ansprüche 5 bis 7, **dadurch gekennzeichnet, dass** ein Schwenkbolzen (12) als gehäusefester Schwenkbolzen (12) fest am Gehäusekörper (9) angeordnet ist.

9. Hecklastenträger (1) nach einem der vorherigen Ansprüche, **dadurch gekennzeichnet, dass** die Betätigungseinrichtung (19) einen Betätigungshebel (27) aufweist, der an dem Gehäusekörper schwenkbar gelagert ist und über einen Zwischenhebelmechanismus (29) derart mit den Halteelementen (10, 11) verbunden ist, dass eine Schwenkbewegung des Betätigungshebels (27) in gegenläufige Schwenkbewegungen der beiden Halteelemente (10, 11) um ihre Schwenkachsen (X1, X2) umgesetzt wird, wobei der Zwischenhebelmechanismus (29) insbesondere als Kniehebelmechanismus ausgebildet ist, wobei der Betätigungshebel (27) bevorzugt an einem nach oben vom Gehäusekörper (9) vorstehenden Vorsprung (28) gelagert ist.

10. Hecklastenträger (1) nach Anspruch 9, **dadurch gekennzeichnet, dass** der Betätigungshebel (27) ausgehend von seiner sich insbesondere parallel zu den Schwenkachsen (X1, X2) der Halteelemente (10, 11) erstreckenden Schwenkachse (X3) einen langen Hebelarm (30) zur manuellen Betätigung und einen kurzen Hebelarm (31) zur gelenkigen Verbindung mit dem Zwischenhebelmechanismus (29) umfasst, wobei der lange Hebelarm (30) und der kurze Hebelarm (31) des Betätigungshebels (27) insbesondere einen Winkel von mindestens 70°, bevorzugt von mindestens 80°, und von höchstens 110°, bevorzugt von höchstens 100°, besonders bevorzugt einen Winkel von 90° einschließen.

11. Hecklastenträger (1) nach Anspruch 10, **dadurch gekennzeichnet, dass** der Zwischenhebelmechanismus (29) mindestens ein Koppelelement (32), welches in seinem einen Endbereich an dem kurzen Hebelarm (31) des Betätigungshebels (27) schwenkbar angeordnet ist, und zwei Zwischenelemente (33, 34), die an ihrem einen Ende gelenkig mit jeweils einem Halteelement (10, 11) und an ihrem anderen Ende mit dem Koppelelement (32) gelenkig um eine gemeinsame, sich insbesondere parallel zu den Schwenkachsen (X1, X2) der Halteelemente (10, 11) erstreckende zentrale Drehachse (X4) verbunden ist, aufweist.

12. Hecklastenträger (1) nach Anspruch 11, **dadurch gekennzeichnet, dass** der Zwischenhebelmechanismus (29) derart ausgestaltet ist, dass die Drehachse (X4) relativ zum Gehäusekörper (9) genau einen translatorischen Freiheitsgrad aufweist.

13. Hecklastenträger (1) nach Anspruch 12, **dadurch gekennzeichnet, dass** der Zwischenhebelmechanismus (29) einen mindestens eine zentrale Drehachse (X4) definierenden Drehbolzen (35) aufweist, um welchen das mindestens eine Koppelelement (32) und/oder die Zwischenelemente (33, 34) schwenkbar gelagert sind, wobei der mindestens eine Drehbolzen (35) insbesondere in sich vertikal erstreckenden Langlöchern des Gehäusekörpers (9) geführt ist.

14. Hecklastenträger (1) nach einem der Ansprüche 11 bis 13, **dadurch gekennzeichnet, dass** die Zwischenelemente (33, 34) die gleiche Wirklänge aufweisen, wobei die Wirklängen der Zwischenelemente (33, 34) zur Wirklänge des Koppelelements (32) insbesondere in einem Verhältnis 1,2 und 0,5 stehen.

15. Hecklastenträger (1) nach einem der vorherigen Ansprüche, **dadurch gekennzeichnet, dass** jedem Halteelement (10, 11) ein elastisches Spannmittel (22) zugeordnet ist, welches das Halteelement (10, 11) in seine Einschubstellung drückt, wobei die Spannmittel insbesondere als Schenkelfedern (22) ausgebildet sind, welche um die Schwenkbolzen (12, 13) liegen, wobei sich bevorzugt ein Schenkel gegen den Gehäusekörper (9) stützt und der andere Schenkel gegen das jeweilige Halteelement (10, 11).

## Revendications

1. Porte-charge arrière (1) destiné à être monté sur un véhicule à moteur
avec un cadre de support (2) qui présente un dispositif de liaison (4) pour la fixation à un attelage de remorque du côté du véhicule, le dispositif de liaison (4) comprenant
un corps de logement (9) ouvert vers le bas,
deux éléments de retenue (10, 11) qui forment entre eux un réceptacle ouvert vers le bas pour une tête de raccordement (6) de l'attelage de la remorque et qui sont montés chacun sur le corps de logement (9) de manière à pouvoir pivoter autour d'un axe de pivotement (X1, X2), et
un dispositif d'actionnement (19) couplé aux éléments de retenue (10, 11) pour les faire pivoter l'un par rapport à l'autre entre une position d'insertion, dans laquelle les éléments de retenue (10, 11) sont écartés par pivotement de telle sorte que le dispositif de liaison (4) peut être placé sur la tête de raccordement (6) ou en être retiré, et une position de maintien, dans laquelle les éléments de retenue (10, 11) s'engagent de manière fixe autour d'une tête de raccordement (6) située dans le réceptacle,
**caractérisé en ce que** le dispositif d'actionnement (19) est relié de manière pivotante aux deux éléments de retenue (10, 11) au-dessus de l'axe de pivotement (X1, X2) de telle sorte que les sections d'extrémité libres (25, 26) des deux éléments de retenue (10, 11) situées en dessous de l'axe de pivotement (X1, X2) sont pivotées l'une vers l'autre dans des directions opposées par le dispositif d'actionnement (19) lorsque les éléments de retenue (10, 11) sont pivotés de leur position d'insertion dans leur position de maintien.

2. Porte-charge arrière (1) selon la revendication 1, **caractérisé en ce que** les éléments de retenue (10, 11) comportent chacun une surface d'appui (20) qui est conçue pour s'appuyer sur un col (8) de la tête de raccordement qui se raccorde à la section sphérique (7) sur le côté inférieur, la surface d'appui (20) ayant en particulier un contour correspondant à une partie d'une enveloppe de cylindre.

3. Porte-charge arrière (1) selon la revendication 2, **caractérisé en ce que** les éléments de retenue (10, 11) présentent chacun une surface de contact (21) qui est conçue pour s'appuyer sur la partie sphérique (7) de la tête de raccordement (6), la surface de contact (21) présentant en particulier un contour correspondant à une partie d'une sphère, les surfaces de contact (21) des éléments de retenue en position de maintien étant de préférence réalisées chacune en forme d'anneau autour d'un axe (Y) s'étendant horizontalement.

4. Porte-charges arrière (1) selon l'une des revendications précédentes, **caractérisé en ce que** les axes de pivotement (X1, X2) des éléments de retenue (10, 11) sont parallèles entre eux.

5. Porte-charge arrière (1) selon l'une des revendications précédentes, **caractérisé en ce qu'**au moins un élément de retenue (10, 11) est monté pivotant autour d'un boulon de pivotement (12, 13) définissant l'axe de pivotement (X1, X2) de l'élément de retenue (10, 11) et est maintenu sur le corps de logement (9).

6. Porte-charge arrière (1) selon la revendication 5, **caractérisé en ce que** l'un des boulons de pivotement (13) est disposé de manière réglable sur le corps de logement (9), de sorte que la distance des axes de pivotement (X1, X2) l'un par rapport à l'autre est réglable pour permettre l'adaptation du dispositif de liaison (4) à des têtes de raccordement (6) de tailles différentes, le boulon de pivotement réglable (13) étant en particulier guidé de manière à pouvoir être déplacé linéairement, de préférence horizontalement, le boulon de pivotement réglable (13) étant de préférence guidé dans des trous oblongs (14) formés dans le corps de logement (9).

7. Porte-charge arrière (1) selon la revendication 6, **caractérisé en ce que** le boulon de pivotement réglable (13) peut être déplacé par une vis de réglage (15) disposée sur le corps de logement (9), la vis de réglage (15) étant en particulier vissée dans un trou fileté correspondant (16) du corps de logement (9) et s'appuyant avec sa face frontale libre (17) tournée vers l'intérieur contre le boulon de pivotement réglable (13), de sorte que par rotation de la vis (15), le boulon de pivotement réglable (13) peut être déplacé par rapport au corps de logement (9).

8. Porte-charge arrière (1) selon l'une des revendications 5 à 7, **caractérisé en ce qu'**un boulon de pivotement (12) est disposé de manière fixe sur le corps de logement (9) en tant que boulon de pivotement fixe (12).

9. Porte-charge arrière (1) selon l'une des revendications précédentes, **caractérisé en ce que** le dispositif d'actionnement (19) comprend un levier d'actionnement (27) qui est monté pivotant sur le corps de logement (9) et qui est relié aux éléments de retenue (10, 11) par un mécanisme à levier intermédiaire (29) de telle sorte qu'un mouvement de pivotement du levier d'actionnement (27) est transformé en mouvements de pivotement en sens inverse des deux éléments de retenue (10, 11) autour de leurs axes de pivotement (X1, X2), le mécanisme à levier intermédiaire (29) étant en particulier conçu comme un mécanisme à genouillère, le levier d'actionnement (27) étant de préférence monté sur une saillie (28) faisant saillie vers le haut du corps de logement (9).

10. Porte-charge arrière (1) selon la revendication 9, **caractérisé en ce que** le levier d'actionnement (27), partant de son axe de pivotement (X3) s'étendant en particulier parallèlement aux axes de pivotement (X1, X2) des éléments de retenue (10, 11), comporte un bras de levier long (30) pour l'actionnement manuel et un bras de levier court (31) pour la liaison articulée avec le mécanisme à levier intermédiaire (29), le bras de levier long (30) et le bras de levier court (31) du levier d'actionnement (27) comprenant notamment un angle d'au moins 70°, de préférence d'au moins 80°, et d'au plus 110°, de préférence d'au plus 100°, de préférence d'un angle de 90°.

11. Porte-charge arrière (1) selon la revendication 10, **caractérisé en ce que** le mécanisme de levier intermédiaire (29) comprend au moins un élément de liaison (32) qui est disposé de manière pivotante dans sa première zone d'extrémité sur le bras de levier court (31) du levier d'actionnement (27), et deux éléments intermédiaires (33, 34) qui sont reliés de manière articulée, à une extrémité, à un élément de retenue (10, 11) et, à l'autre extrémité, à l'élément de liaison (32), de manière articulée autour d'un axe de rotation central commun (X4) s'étendant notamment parallèlement aux axes de pivotement (X1, X2) des éléments de retenue (10, 11).

12. Porte-charge arrière (1) selon la revendication 11, **caractérisé en ce que** le mécanisme de levier intermédiaire (29) est conçu de telle sorte que l'axe de rotation central (X4) présente exactement un degré de liberté en translation par rapport au corps de logement (9).

13. Porte-charge arrière (1) selon la revendication 12, **caractérisé en ce que** le mécanisme à levier intermédiaire (29) comprend au moins un pivot (35) définissant l'axe de rotation central (X4), autour duquel le au moins un élément de liaison et/ou les éléments intermédiaires (33, 34) sont montés de manière pivotante, le au moins un pivot (35) étant en particulier guidé dans des trous oblongs s'étendant verticalement du corps de logement (9).

14. Porte-charge arrière (1) selon l'une des revendications 11 à 13, **caractérisé en ce que** les éléments intermédiaires (33, 34) ont la même longueur effective, la longueur effective des éléments intermédiaires (33, 34) étant en particulier dans un rapport compris entre 1,2 et 0,5 par rapport à la longueur effective de l'élément de liaison (32).

15. Porte-charge arrière (1) selon l'une des revendications précédentes, **caractérisé en ce qu'**à chaque élément de retenue (10, 11) est associé un moyen de tension élastique (22) qui presse les éléments de retenue (10, 11) vers leur position d'insertion, les moyens de tension étant notamment réalisés sous la forme de ressorts à branches (22) qui s'appuient autour des boulons de pivotement (12, 13), une branche s'appuyant de préférence sur le corps de logement (9) et l'autre branche sur l'élément de retenue (10, 11) respectif.
